# EUROPEAN PATENT APPLICATION

(11) **EP 1 213 950 A2**
(43) Date of publication of application: **12.06.2002**
(21) Application number: 01402952.4
(22) Date of filing: 16.11.2001
(51) Int. Cl.: H05H 1/34

(54) **Improved and modified plasma torch for enhanced enthalpy delivery**

(30) Priority: 06.12.2000 US 729851
(71) Applicant: ALCATEL, 75008 Paris (FR)
(72) Inventor: Neogi, Sudarsan, Hickory, North Carolina 28601 (US); Keller, Gerald Chadwick, Taylorsville, North Carolina 28681 (US); Tallman, James Edmond Jr., Claremont, North Carolina 28610 (US)
(74) Representative: Cabinet Hirsch

(57) **Abstract**

An improved plasma torch (200) which is used to physically transform quartz silica (SiO₂) granules (1000) and deposit the transformed silica as over-cladding on a fiber optic preform core and cladding (100). The improved plasma torch includes an increase in torch diameter of approximately 20% over existing torches; an increase in diffuser diameter of approximately 90% over existing torches, coupled with a conical diffuser shape, where the diffuser (400) has a circular base (401), the diameter of which matches the torch central gas region diameter (503) to allow the diffuser to be "self-centering"; and an increase in swirl ring diameter of approximately 48% over existing torches. Wherein, these changes increase the efficiency of the present plasma torch by increasing the plasma plume size, reducing turbulence and intermixing of swirl and central gases at the base of the torch and eliminating problems associated with "back arcing." Therefore, the present invention will reduce costs and production times of fiber optic preforms, while avoiding an increase in the occurrences of structural faults or impurities in the silica cladding of the fiber optic preform, which are normally encountered with an increase in production speeds. The present invention can result in an increase of the silica grain deposition rate of approximately 50%.

## Description

### BACKGROUND OF THE INVENTION

### Field of the Invention

The present invention generally relates to the field of optical fibers, and more particularly to a plasma torch used to physically transform quartz silica (Si0₂) grains which are deposited onto fiber optic preforms, from which optical fibers are drawn.

### Discussion of Related Art

Optical fibers are very small diameter glass strands which are capable of transmitting an optical signal over great distances, at high speeds, and with extremely low signal loss as compared to standard wire or cable networks. Optical fiber has found increasingly widespread application and currently constitutes the backbone of the worldwide telecommunication network. Because of this development, there has been a growing need for better quality optical fibers with a decrease in production time and costs, while ensuring adequate material strength for continued operation in increasingly harsh conditions. An important aspect for making better optical fibers is the reduction of material or structural faults or impurities in the fiber optic preform and, therefore, the optical fiber, during manufacture.

In general, optical fibers are manufactured from relatively large diameter glass preforms. Fiber optic preforms are generally made with three concentric glass layers. The inner layer, or core, is made of a very high quality, high purity SiO₂ glass which is generally about 5 mm in diameter. This high purity core is the portion of the optical fiber in which the optical data is transmitted. Concentrically positioned around the high purity core is a second layer of glass, or cladding, with a lower index of refraction then the inner core, and generally less pure. The difference in refraction indices between the core and cladding allows the optical signals in the core to be continuously reflected back into the core as they travel along the fiber. The typical cladding outer diameter is about 15 mm to 25 mm. The combination of the core and cladding layers is often referred to as the "primary preform."

The final layer of the preform is often called the "over-clad" layer. This is a layer of glass deposited onto the primary cladding layer. The purpose of this over-clad layer is to increase the total volume of the primary preform and, therefore, the glass fiber drawn from the preform. This increases fiber output or production from a single preform. The typical over-clad layer has an outer diameter of between 50 mm to 100 mm. The typical preform ranges in length from 500 mm to 1200 mm, and can be drawn into glass fiber ranging in length from 300 km to 700 km.

In a typical process to manufacture an optical fiber from a preform, the preform is heated to a high drawing temperature (typically around 2000°C) and as the glass preform melts it is drawn at a rate to ensure the fiber has a predetermined diameter, typically 125 microns in diameter. Because of the difficulty of this manufacturing process, and relatively low tolerance of impurities or flaws in the preform, the making of the glass preform is very important. Therefore, many of the technological developments in the area of fiber optics focus on the manufacture of better quality preforms, while increasing preform production speeds. The two main goals have been less impurities and less structural faults in both the core and the cladding. Structural faults or impurities in either of these portions of the preform are carried into the fiber when it is drawn, thus greatly reducing the efficiency of the fiber and the amount of data it can carry at a given time.

The core and cladding layers of a fiber optic glass preform (i.e. the primary preform) are typically made by the process of chemical vapor deposition. This method comprises inserting the materials to make the two layers into a glass tube in vapor form. The vapor is heated, thus causing the materials in the vapor to chemically react and bind onto the inner surface of the tube, such that the inner diameter of the tube is constantly decreased. Following this process the entire tube is then heated again and collapsed onto itself so as to eliminate the small diameter hole still remaining after the chemical vapor deposition is completed. This process results in a glass rod having both the pure core, and the clad layer over the core (i.e. the "primary preform").

The depositing of the over-clad layer over the clad layer is the final step in manufacturing an optical fiber preform. There are many different ways manufacture the over-clad layer. One method is make the layer in a sleeve and place the sleeve over the outside of the clad layer and collapse the sleeve onto the clad layer in a similar way the core and clad layers are collapsed. Another method to deposit the over-clad layer is through a plasma deposition process. This process involves melting quartz silica grains and propelling them at the preform core and cladding layers (i.e. the primary preform) so as to be deposited there. A plasma torch is used in this process. The plasma torch creates an extremely high temperature environment (plasma) by plasmasizing the air in the torch through ionization and dissociation with the application of a radio-frequency electromagnetic field.

The silica grains are then placed into this high temperature environment (plasma) and are physically transformed to the optimum consistency for deposit onto the primary preform. The plasma torch then propels the physically transformed grains onto the surface of the primary preform cladding, thus fusing the grains into a single uniform layer of over-cladding. The preform is moved back and forth and rotated so as to ensure uniform distribution of the silica on the preform.

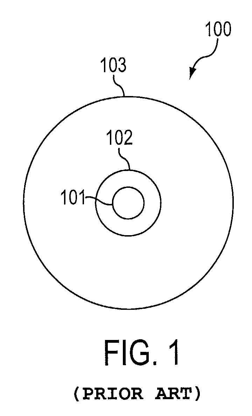

Figure 1 shows the typical cross-section of an optical fiber preform 100 used in the manufacture of optical fibers. The preform 100 is mainly comprised of three important concentric layers. The center most layer is the core 101, which is made of very pure silica and through which the light data transmission takes place. The core 101 is then surrounded by a cladding layer 102, which is also made of silica glass but has a level of purity less than that of the core 101 (this is because the cladding layer is typically doped with GeO₂ and P₂O₅). This difference in purity level results in the two layers having different indicies of refraction, thus allowing the light data transmission to be continually reflected back into the core as it travels along the optical fiber. Finally, the outer most layer of the preform 100 is the over-cladding layer 103. As stated earlier, this over-cladding layer 103 is used to increase the volume of the preform to increase optical fiber output and production. The over-cladding layer 103 is typically made of natural silica sand which is specially processed to obtain a high level of purity.

Although this method of depositing the over-cladding on the primary preform aids in reducing the above mentioned problems of structural faults and impurities in the preform cladding, it is not without its constraints. First, conventional torches have relatively narrow diameters in their exit nozzles or end caps, which keeps the plasma plume (the hottest region in the plasma zone) relatively narrow. This means that a smaller amount of the silica grains are physically transformed and, therefore, fused to the surface of the preform.

Another problem with existing plasma torches is the shape and size of the diffuser within the torch end cap. The function of the diffuser is to allow the introduction of plasma (or central) gases into the torch. In the prior art, the shape of the diffusers are cylindrical, and they have a relatively small diameter as compared to the central gas region located in the torch. The central gas region is the region in the base of the plasma torch where the central or plasma gases are introduced into the torch. The diffuser, located in this region, evenly distributes the plasma or central gas around the annulus created between the diffuser and the central gas region wall so it is propelled out of the central gas region of the torch in an annular form.

There are a number of problems associated with these prior art diffuser configurations. One problem is due to the relatively small diameter of the diffuser with respect to the central gas region. One of the main functions of the diffuser is to allow the introduction of the central or plasma gases into the torch in an annular form. The relatively small diameter of current torch diffusers restricts the entrance of those gases, thus limiting the size of the plasma plume. The smaller the plasma plume, the less amount of silica grains being transformed and subsequently fused on the preform.

Another serious problem with the current prior art diffusers is due to their cylindrical shape. As stated earlier, prior art diffusers are shaped like cylinders and are placed in the central gas region. Ideally the diffuser should be exactly centered in the central gas region to ensure truly even central gas emission into the torch. However, to allow the central gas to exit there must be an annular gap between the wall of the central gas region and the diffuser. Typically, this gap is approximately 1/2 mm, and is to be maintained all around the central gas region. The diffuser is usually mechanically fastened to the bottom of the central gas region. But, because of errors in manufacture of the diffuser, or during installation, and because of the low tolerances for error allowed, the cylindrical diffuser is rarely placed directly in the center of the central gas region of the torch. This results in the annular gap between the diffuser and the central gas region wall being uneven around the perimeter of the diffuser. This uneven gap around the diffuser results in uneven central gas flow from the central gas region.

Further, the cylindrical configuration of prior art diffusers also tends to allow the diffuser to "tilt" within the torch while in operation. This "tilting" of the diffuser adversely affects the annular gas velocity around the diffuser in a similar fashion to the improper installation, by resulting in an instability of gas flow around the diffuser. Additionally, the above two problems with current diffusers results in a substantial drop in the central gas pressure within the torch, as it enters the central gas region and subsequently enters the torch.

This instability and loss of pressure in the central gas results in an unstable plasma zone. The plasma region in plasma torches is very sensitive to instabilities in the plasma or central gas. There are a number of problems which are associated with unstable flow or pressure loss in the central or plasma gas. One of the most serious problems is "back arcing". "Back arcing" is a situation in which the unstable plasma from the plasma region retracts towards the base of the torch, thus creating an electrical "arc." As the plasma in the plasma region can range from 8,000°C to 10,000°C this is quite damaging to the plasma torch. The striking of the plasma on the torch will immediately deform the metal at the base of the torch, at the locations the "arc" strikes. These deformations in the torch base, which is manufactured to very precise tolerances, coupled with the already unstable plasma cause the plasma plume to become even more unstable, thereby reducing its effectiveness and increasing the possibility of impurities or structural faults in the preform. Therefore, once "back-arcing" occurs the over-cladding process must be stopped and the torch replaced. This greatly delays the manufacturing process of the preform, and often results in the preform being manufactured to be scrapped.

To avoid this major problem with prior art torches the power used to generate the plasma region must be kept relatively small. As the power and, therefore, plasma region is increased the stability of the plasma or central gases becomes critical. As the instability of the plasma increases the power must be reduced to prevent problems like "back-arcing." By reducing the power, and subsequently the plasma region size and temperature, the amount of silica that can be deposited onto the preform in any given amount of time is greatly reduced. This again is disadvantageous as it is required that the preforms be made as fast as possible.

Another problem associated with current plasma torches is turbulence and intermixing between the central gas and swirl gas at the base of the torch, or where the annular central gas enters into the "swirl ring" region and comes into contact with the swirl gas. The "swirl ring" region is a circular region in the torch base which is directly above the central gas region. The diameter of the swirl ring region is generally slightly larger than that the of the central gas region, creating a step in the base. The purpose of the swirl gas, which enters the torch in the swirl ring region, is to provide stability to the central or plasma gas (to aid in stabilizing the plasma region) and to protect the base and walls of the torch from the dramatic heat created. To accomplish this, the swirl gas enters the swirl ring in a plane perpendicular to the direction that the central or plasma gas is exiting the central gas region and at an angle so as not to be directed directly at the center of the torch base. This "swirling" or "cycloning" gas provides a "stabilizing shroud" which ensures that the central gas and, therefore, the plasma region stays stable during operation.

However, the prior art configuration of the swirl ring has a severe drawback. As stated earlier, the diameter of the swirl ring in prior art torches is only slightly larger than that of the central gas region. Usually the diameter of the swirl ring region of prior art torches is only about 50% larger than the diameter of the central gas region. This relatively small increase tends to cause the injected swirl gas to intermix with the central or plasma gas at the point where the swirl gas enters the swirl gas region. This intermixing causes turbulence in the central or plasma gas in the torch base and thus aids in creating an unstable plasma region. Further, the intermixing of these gases also causes an aerodynamic low pressure region in the base of the torch where the gases mix. This low pressure region, combined with the unstable air flow and plasma region tends to draw the plasma back towards the torch base and leads to "back-arcing". This is the problem discussed previously where the plasma comes back to touch the torch base, ultimately destroying the base.

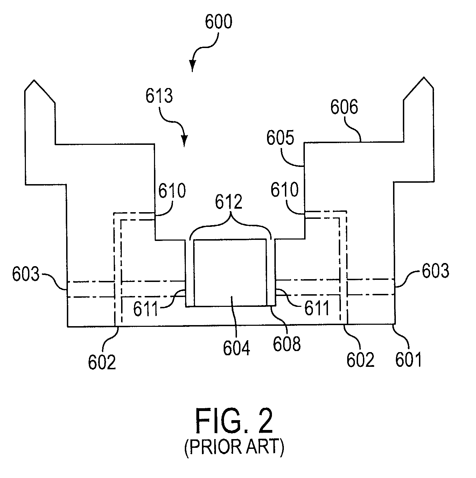

A diagrammatical representation of a prior art plasma torch base can be seen in Figure 2. Figure 2 shows the base 600 of a prior art plasma torch as described above. The prior art torch base 600 is made up of a base component 601 and a diffuser 604. As stated earlier, in the prior art the diffuser 604 is made cylindrical in shape to ensure an adequate annular gap 612 between the diffuser 604 and the wall of the central gas region 608. For the prior art torches to function properly this annular gap 612 must be maintained constant at all points around the diffuser 604. As discussed earlier, this is very difficult to achieve and in fact rarely can be assured, thus leading to many of the problems discussed earlier with regard to prior art torches. The central or plasma gas enters the base 601 through two central gas ports 603 and enters the central gas region 608 through central gas openings 611. The central or plasma gas then surrounds the diffuser 604 and exits the central gas region at the open end of the central gas region. The base 601 also has a swirl ring region 613 which is above the central gas region 608. The swirl gas enters the torch base 600 in the swirl ring region 613 through two swirl gas openings 610 in the swirl ring region wall 605, and enters the base 601 at two swirl gas ports 602. The swirl gas openings 610 are configured such that the swirl gas enters the swirl ring region 613 in a plane which is perpendicular to the direction the central gas exits the central gas region 608. However, the central gas openings 610 are angled such that the swirl gas will enter the swirl ring region 613 at an angle to the center of the base, and will cyclone or swirl around the central gas as it exits the central gas region 608. In prior art torch bases 600 the swirl ring region diameter is typically only 50% larger than the diameter of the central gas region. As stated earlier, this configuration of the prior art torch base and diffuser results in numerous problems resulting in unstable plasma plumes and low operational power settings.

The combination of these problems with the prior art greatly affects the productivity of prior art torches. Because of the problems with low pressure regions in the base and instability in the central or plasma gas, the size and the power level that prior art torches can operate at is greatly limited. This low power level is necessary to maintain stability in light of the various problems with the prior art. Because of the lower power level, the size of the plasma region is reduced, which means that the amount of silica grain which can be transformed and deposited on the preform is limited. Further, the reduced power level also adversely affects the amount of silica grain that can be deposited on the surface of the preform.

Because of the problems with current plasma torches enumerated above the method of depositing silica cladding on a primary preform can be costly and inefficient. It can result in severe structural faults in the over-cladding layer which ultimately mean the entire preform is unable to be used in the very delicate optical fiber draw process. It can also mean that the torch base requires constant replacement because of the repeated damage caused by "back-arcing".

### SUMMARY OF THE INVENTION

The present invention is directed to eliminating the above problems while at the same time making the process of using a plasma torch to deposit silica cladding on a primary preform more efficient, by depositing more silica at a faster rate than current plasma torches, without any increase in preform defects or structural anomalies.

Because of the novel features of the present invention, discussed in more detail below the size and operating power of the plasma torch can be substantially increased. This increase in size and power can result in a silica grain deposition rate increase of approximately 50%.

According to the present invention, the end cap of the plasma torch (or torch base) is modified over current prior art designs to increase the torches stability and efficiency, while reducing or eliminating problems such as "back arcing." This is accomplished by making a number of novel changes to current torch base or end cap design.

First, the present invention employs a diffuser which has a dramatic change in design over thc prior art diffusers. As discussed earlier, traditional diffusers are cylindrically shaped and have a relatively small diameter as compared to the central ring diameter of prior art torches. (To allow the central gas to exit annularly around the diffuser.) These aspects of current diffusers lead to problems such as "tilting" of the diffuser and "back arcing" of the plasma. The present invention eliminates these two problems with a substantial change in the shape and design of the diffuser.

There are two main aspects to the new diffuser design that lead to a substantial increase in torch efficiency and productivity. The first is that the diffuser is now "self-centering" in the central gas region, and the second is that the diffuser is now conically shaped, not cylindrically shaped. The "self-centering" aspect of the new diffuser comes from the fact that the its circular base diameter is matched with the diameter of the central gas region in the torch. This aspect of the invention eliminates any potential problem of misalignment during installation or manufacture of the torch. Because the diffuser is self-centering it will always be installed in the exact center of the central gas region, thus ensuring that the proper gap is maintained between the top edge of the diffuser and the central gas region wall, therefore, ensuring a very stable central or plasma gas. Also, because the diffuser is self-centering the problems associated with the diffuser tending to "tilt" during operation have also been eliminated. The second change to the prior art diffusers is the new conical shape. This new shape provides dramatic aerodynamic advantages over the prior art design. Primarily, the conical shape of the diffuser allows the central or plasma gas to stabilize in the void created by the conical shape before the gas exits the central gas region into the swirl ring region. Further, because of this period of gas stabilization, there is much less pressure drop in the central gas region before the central gas exits. This lower amount of pressure drop means that the force at which the central gas exits the central gas region is greater than prior art torches and results in a more stable and larger plasma region. Additionally, the conical shape aids in preventing the diffuser from "tilting" during operation.

These changes in the diffuser design result in the annular gas velocities around the diffuser becoming more uniform than that of current diffuser configurations, resulting in a more stable plasma plume which eliminates "back arcing." This increase in stability and more uniform annular gas velocities allow the diameter of the diffuser to be increased by approximately 90% over the existing diffusers. This is because the new diffuser design greatly reduces the instability of the central gas and, therefore, allows more gas to be used in the torch. Because the diffuser functions to allow the introduction of plasma gases into the torch, this increase in diameter greatly increases the size of the plasma plume or region. As mentioned earlier, an extended plasma plume results in a much more efficient torch, due to an increase in silica grains which are transformed in the plasma plume and deposited on the preform core.

A second novel feature of the new invention is the dramatic increase in the diameter of the swirl ring region as compared to the central gas region diameter. As stated earlier, the swirl ring region diameters of prior art torches are only approximately 50% larger than the central gas region diameter. However, the present invention increases the diameter of the swirl ring region such that it is at least 100% larger than the diameter of the central gas region. This increase in diameter greatly increases the segregation between the central and swirl gases at the base of the torch. By increasing the segregation of these two gases, the problems associated with turbulence and intermixing of the gases, at the base of the torch, are eliminated. The central gas becomes more stable as it is not intermixing with the swirling gas, and the pressure drop associated with this intermixing is greatly reduced. These two characteristics of the larger swirl ring region diameter greatly increase the stability of the central or plasma gas and thus the plasma plume or region. As stated earlier, when stability is increased the power and size of the plasma plume can be increased, resulting in a larger amount of silica being transformed and deposited on the preform, without the problems associated with the prior art.

In addition to the benefits stated above, these changes can allow the diameter of the torch base to be increased by about 20% over that of existing torches. This increase in diameter increases the width of the plasma plume projected from the torch. The plasma plume is the hottest region in the plasma torch and, therefore, is used to transform the quartz silica grains that are to be deposited on the preform core. By increasing the width of the plasma plume the number or amount of silica grains that can be transformed per unit of time is increased greatly, which increases the amount of silica that can be deposited on the preform in a single unit of time. This increase in diameter greatly increases the efficiency of the plasma torch over current torches.

As shown in the discussion above, the present invention greatly increases the efficiency of a plasma torch over current torches, while reducing or eliminating many of the problems associated with current plasma torches. The reduction or elimination of these problems, in conjunction with increasing efficiency, significantly reduces the production times for fiber optic preforms, and thus fiber optic cable.. Additionally, because of the present invention there is no increase in structural faults or impurities in the silica over-cladding of preforms that would normally be associated with an increase in production speed of the preforms. These advantages of the present invention greatly reduce the costs of manufacturing fiber optic preforms, therefore, significantly aiding in the advancement of fiber optic use and technological developments in the area of fiber optics.

### BRIEF DESCRIPTION OF THE DRAWINGS

The advantages, nature and various additional features of the invention will appear more fully upon consideration of the illustrative embodiment of the invention which is schematically set forth in the drawings, in which:
Figure 1 - Is a cross-sectional view of a typical optical fiber preform showing the core, cladding and over-cladding layers.
Figure 2 - Is a cross-sectional view of a prior art plasma torch base and diffuser.
Figure 3 - Is a diagrammatical representation of an embodiment of the plasma torch of the present invention shown in operation, depositing the silica grain on the preform.
Figure 4 - Is a cross-sectional view of an embodiment of the diffuser of the present invention.
Figure 5 - Is a cross-sectional view of an embodiment of the plasma torch base and diffuser of the present invention.

### DETAILED DESCRIPTION OF THE INVENTION

The present invention will be explained in further detail by making reference to the accompanying drawings, which do not limit the scope of the invention in any way.

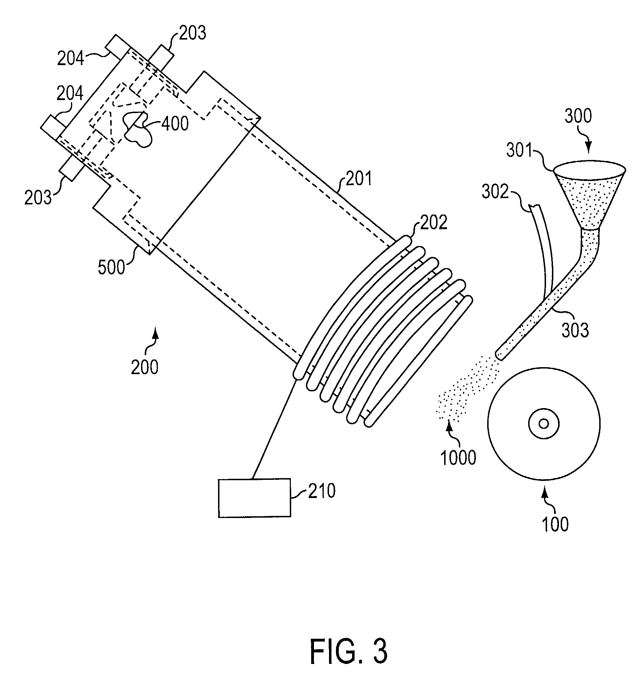

Figure 3 is a diagrammatical representation of a plasma torch 200 having an embodiment of the torch base 500 of the present invention, shown with the preform 100 during the coating operation. As shown in Figure 3, the plasma torch assembly 200 is positioned such that the opening of the quartz plasma confinement tube 201 is directed at the preform 100 to be coated. Typically the quartz plasma confinement tube 201 is made from quartz glass and has a multiple wall structure. The multiple wall structure allows cooling water to be circulated through the walls of the confinement tube 201 to protect the tube 201 from the extremely high temperatures generated in the plasma region. Typically, a radio-frequency coil 202 is located near the open end of the confinement tube 201, but can also be located more towards the center of the confinement tube 201, depending on the desired location of the plasma region. The radio-frequency coil 202 is used to generate the electromagnetic field which plasmatizes the air, thus creating the plasma plume or region, which is used to transform the silica grain and deposit it on the preform 100. This coil 202 is used to ignite and sustain the plasma plume or region and is connected to an oscillator 210 of several megahertz frequency. The oscillator 210 is typically rated to attain a maximum power of 100 kW. The confinement tube 201 is secured to the plasma torch base 500, which is typically made from stainless steel. The plasma torch base has a number of regions and components which will be discussed in more detail below.

A diffuser 400 is centered within the plasma torch base 500. The torch base 500 is also connected to compressed air through multiple ports in the base 203 and 204. The central gas connections 203 are connected to a compressed air generator (not shown) which is capable of providing compressed air at approximately 40 PSI. Additionally, the compressed air generator connected to the central gas connections 203 is capable of providing a short burst of igniter gas for the plasma torch, such as Argon. The igniter gas is used in plasma torches because of the relatively poor ignition characteristics of regular air. However, once the plasma plume is ignited, regular air can then be used. In addition to the central gas connections 203, the torch base has swirl gas connections 204 which are also connected to a source of compressed air (not shown). The swirl gas used is typically just standard compressed air. The swirl gas is used to aid in stabilizing the plasma plume or region and aid in protecting the torch base 500 from the high temperatures generated during the process.

The pure silica grain 1000 is then placed into the plasma plume or region through the use of a grain funnel 300. The grain funnel 300 is positioned such that the grain 1000 will fall into the plasma plume between the opening of the confinement tube 201 and the preform 100 such that the grain will be adequately transformed and deposited on the preform 100, and fused to make a continuous over-clad layer 103 on the preform 100. The grain 1000 enters the grain funnel 300 through a funnel opening 301 and will travel through the funnel shaft 303 to be placed in the plasma region. Further, it is desirable for the grain funnel 300 to have an additional shaft 302 for compressed air to aid in propelling the grain through the grain shaft 303 into the plasma plume.

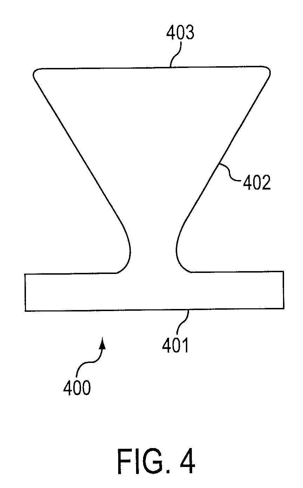

A cross-section of an embodiment of the diffuser 400 of the present invention can be seen in Figure 4. Figure 4 shows the diffuser 400 as configured in the preferred embodiment. The diffuser 400 comprises a self-centering portion 401 and a conical portion 402. The maximum diameter of the conical portion 402 is made such that it has a slightly smaller diameter than that of the self-centering portion 401. The self-centering portion 401 has a diameter such that it has a friction fit with the walls of the central gas region 501. This friction fit is such that the diffuser 400 has to be "press-fitted" into the central gas region 501 of the torch base 500. This friction fit causes the diffuser 400 to be "self-centering," because there is no "play" or gap around the diffuser 400 at the self-centering portion 401 for the diffuser to be out of alignment. As shown in Figure 2, because of the cylindrical shape of the prior art diffuser 604, there is no "self-centering" characteristic.

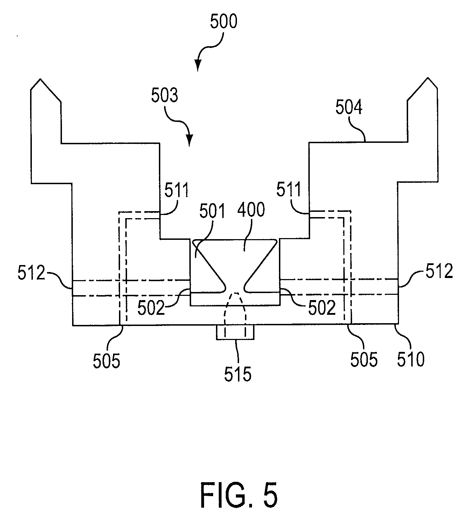

In the preferred embodiment of the present invention, the overall diffuser diameter is increased approximately 90% over that of the prior art. A further embodiment of the present invention has the diffuser 400 secured to the torch base 500 through a mechanical means 515 such as a bolt, screw, adhesive, welding or other mechanical fastening means. *See* Figure 5. The top surface 403 of the diffuser 400 is of a height such that it is in the same plane as the opening in the central gas region 501. Further, the diameter of the top surface 403 is such that a constant width gap is maintained between the end of the diffuser conical portion 402 and the wall of the central gas region 501, so as to ensure stable central gas flow as it exits the central gas region 501. The diffuser 400 can be made from any heat tolerant material. In the preferred embodiment the diffuser 400 is made from stainless steel.

Figure 5 shows a cross-section of an embodiment of the torch base 500 of the present invention. The torch base 500 is comprised of a base component 510 and the diffuser 400. Similar to the prior art base 600, the preferred embodiment of the base component 510 is made with separate regions. The central gas region 501 is located at the base of the base component 510, and has the diffuser 400 press-fit, friction fit or mechanically connected through a mechanical fastening means 515 to the base component 510. As with the diffuser 400, in the preferred embodiment of the present invention, the diameter of the central gas region is increased by approximately 90% over the prior art. This increase allows more central or plasma gas to enter the torch thus increasing the size and effectiveness of the plasma plume or region.

The central gas enters the base component 510 through at least one central gas port 512, and enters the central gas region 501 through at least one central gas opening 502. The conical configuration of the diffuser 400, as shown allows the central or plasma gas to stabilize in the central gas region 501, without a substantial pressure drop of the central gas before it exits the central gas region 501.

Like the prior art, in the present invention the swirl ring region 503 is located immediately after the central gas region 501. However, the diameter of the swirl ring region 503 in the present invention is substantially larger than that in the prior art. In the preferred embodiment of the present invention the swirl ring region 503 diameter is approximately 48% larger than the diameters of the swirl ring regions in prior art. However, more importantly the diameter of the swirl ring region 503 is at least 100% larger than the diameter of the central gas region 501. This is a substantial increase over the prior art, which results in substantial separation or segregation between the central and swirl gases at the base of the torch. With very little intermixing of the gases and a dramatic reduction in the turbulence that results, the stability of the central or plasma gas as it leaves the swirl ring region 503 is substantially increased. The benefits of this stability was discussed earlier. Further, the swirl gases enter the base component 510 through at least one swirl gas port 505 and enter the swirl ring region through at least one swirl gas opening 511. The swirl gas opening 511 of the present invention is very similar to that in the prior art, in that the planar direction of the swirl gas is perpendicular to the direction of the central gas as the central gas exits the central gas region 501. Also, the swirl gas enters the swirl ring region at an angle with respect to the center of the torch base 500, thus creating a swirl gas cyclone effect around the central gas.

In the preferred embodiment of the present invention, the base component 510 also has a confinement tube base 504 which is located after the central ring region 503. The confinement tube 201 rests on and is secured to the torch base 500 at the confinement tube base portion 504 through mechanical means that are commonly known and used in the prior art. Also the preferred embodiment increases the overall diameter of the torch base 500 by about 20% over that of the prior art to further increase the size and stability of the plasma plume or region thus increasing the efficiency of the torch. Finally, although the base component 510 can be constructed of any heat resistant material, it is desirable that the material also be of a type that can allow manufacture by machining to a high degree of tolerance. An example would be stainless steel.

It is of course understood that departures can be made from the preferred embodiments of the invention by those of ordinary skill in the art without departing from the spirit and scope of the invention that is limited only by the following claims.

## Claims

1. A plasma torch base (500), comprising:
- a base (510) including a first cylindrical cavity corresponding to a central gas region (501) for introducing a central gas, a central gas port (512) for introducing the central gas into the central gas region, a second cylindrical cavity disposed downstream of the central gas region and corresponding to a swirl ring region (503) for introducing a swirl gas, and a swirl gas port (505) for introducing the swirl gas into the swirl ring region; and
- a diffuser (400) disposed in said central gas region and having a conical shape portion (402) which defines an annular opening with said first cylindrical cavity through which said central gas passes.

2. The plasma torch base according to claim 1, wherein said diffuser further comprises a self-centering portion (401) to self-center said diffuser in said central gas region.

3. The plasma torch base according to claim 2, wherein said self-centering portion (401) is friction-fitted with said first cylindrical cavity (503).

4. The plasma torch base according to claim 1, wherein said diffuser is mechanically fastened to said base.

5. The plasma torch base according to claim 3, wherein said self-centering portion (401) is mechanically fastened to said base (510).

6. The plasma torch base according to one of claims 1 to 5, wherein the swirl ring region (503) has a diameter at least 100% larger than a diameter of central gas region (501).

7. The plasma torch base (500) according to one of claims 1 to 6, further comprising a containment tube base which defines a third cylindrical cavity disposed downstream of said swirl ring region.

8. The plasma torch base according to one of claims 1 to 7, wherein the diffuser (400) is stainless steel.

9. The plasma torch base according to one of claims 1 to 8, wherein the base (510) is stainless steel.

10. A plasma torch base (500), comprising:
- a base (510) including a first cylindrical cavity corresponding to a central gas region (501) for introducing a central gas, a central gas port (512) for introducing the central gas into the central gas region, a second cylindrical cavity (503) disposed downstream of the central gas region and corresponding to a swirl ring region for introducing a swirl gas, and a swirl gas port (505) for introducing the swirl gas into the swirl ring region, said swirl ring region (503) having a diameter at least 100% larger than a diameter of said central gas region (501); and
- a diffuser (400) disposed in said central gas region.

11. The plasma torch base according to claim 10, wherein said diffuser (400) has a conical shape portion (402).

12. The plasma torch base according to claim 10 or 11, wherein said diffuser has a self-centering portion (401) to center said diffuser in said central gas region.

13. The plasma torch base according to claim 12, wherein said self-centering portion is mechanically fastened to said base in said central gas region.

14. The plasma torch base according to claim 12, wherein said self-centering portion is friction-fit into said central gas region.

15. The plasma torch base according to one of claims 10 to 14, wherein the diffuser is stainless steel.

16. The plasma torch base according to one of claims 10 to 15, wherein the base is stainless steel.

17. The plasma torch base according to one of claims 10 to 16, further comprising a third cylindrical cavity corresponding to a containment tube base, wherein said containment tube base is disposed downstream of said swirl ring region.

18. A plasma torch base (500), comprising:
- a base (510) including a first cylindrical cavity corresponding to a central gas region (501) for introducing a central gas, a central gas port (512) for introducing the central gas into the central gas region, a second cylindrical cavity disposed downstream of the central gas region and corresponding to a swirl ring region (503) for introducing a swirl gas, and a swirl gas port (505) for introducing the swirl gas into the swirl ring region; and
- a diffuser (400) disposed in said central gas region, wherein said diffuser comprises a conical shape portion (402) and a press-fit portion (401) which is press-fitted into said first cylindrical cavity to secure said diffuser into said central gas region.

19. The plasma torch base according to claim 18, further comprising a third cylindrical cavity corresponding to a containment tube base, wherein said containment tube base is disposed downstream of said swirl ring region.

20. The plasma torch base according to claim 18 or 19, wherein the swirl ring region has a diameter at least 100% larger than a diameter of central gas region.

21. The plasma torch base according to claim 18, 19 or 20, wherein said base and said diffuser are stainless steel.

22. The plasma torch base according to one of claims 18 to 21, wherein said press-fit portion is mechanically fastened to said base.
